Europäisches Patentamt

European Patent Office

Office européen des brevets

(19)

(11) Publication number: **0 047 410**
**B1**

# (12) EUROPEAN PATENT SPECIFICATION

(45) Date of publication of patent specification: **04.12.85**

(51) Int. Cl.⁴: **B 23 K 1/12**

(21) Application number: **81106418.7**

(22) Date of filing: **19.08.81**

(54) **Braze sleeving method.**

(30) Priority: **09.09.80 US 185654**

(43) Date of publication of application:
**17.03.82 Bulletin 82/11**

(45) Publication of the grant of the patent:
**04.12.85 Bulletin 85/49**

(84) Designated Contracting States:
**BE CH DE FR GB IT LI NL SE**

(56) References cited:
**GB-A- 939 413**
**GB-A-1 472 904**
**GB-A-2 032 559**
**US-A-4 069 573**

(73) Proprietor: **WESTINGHOUSE ELECTRIC CORPORATION**
**Westinghouse Building Gateway Center**
**Pittsburgh Pennsylvania 15222 (US)**

(72) Inventor: **Burack, Robert David**
**327 Challen Drive**
**Pittsburgh Pennsylvania (US)**

(74) Representative: **Holzer, Rupprecht, Dipl.-Ing.**
**Philippine-Welser-Strasse 14**
**D-8900 Augsburg (DE)**

Courier Press, Leamington Spa, England.

## Description

This invention relates to tube repair methods and more particularly to methods for attaching a sleeve within a tube by a brazing procedure.

In tube-type heat exchangers, a first fluid flows through the tubes of the heat exchanger while a second fluid surrounds the outside of the tubes such that heat exchange occurs between the two fluids. Occasionally, one of the tubes can become defective such that a leak occurs therein which allows the fluids to mingle. When this occurs, it is sometimes necessary to plug the tube so that the fluid does not flow through the tube, thereby preventing leakage from the tube.

In nuclear reactor power plants, the tube-type heat exchangers are commonly referred to as steam generators. When a defect occurs in the tubes of a nuclear steam generator that allows the coolant in the tubes to mingle with the coolant outside of the tubes, a more significant problem arises. Not only does this situation create an ineffective heat exchanger, but it also creates a radioactive contamination problem. Since the fluid flowing in the tubes of a nuclear steam generator is generally radioactive, it is important that it not be allowed to leak from the tubes and contaminate the fluid surrounding the tubes. Therefore, when a leak occurs in a nuclear steam generator heat exchange tube, the heat exchange tube must either be plugged or repaired so that the coolant does not leak from the tube. This prevents contamination of the fluid surrounding the tubes.

There are several methods known in the art for repairing heat exchange tubes, however, many of these methods are not applicable to repair of heat exchange tubes wherein the tube is not readily accessible. For example, in a nuclear steam generator the physical inaccessibility of defective heat exchange tubes and the radioactive nature of the environment surrounding the heat exchange tubes presents unique problems to repairing heat exchange tubes that do not normally exist in other heat exchangers. For these reasons, special methods have been developed for repairing heat exchange tubes in nuclear steam generators. Typically, the method used to repair a heat exchange tube in a nuclear steam generator is one in which a metal sleeve having an outside diameter slightly smaller than the inside diameter of the defective tube is inserted into the defective tube and attached to the defective tube to bridge the defective area of the tube. This type of repair method is generally referred to as "sleeving". Previous sleeving development work has been concerned with obtaining a relatively leakproof joint between the sleeve and the tube by brazing, arc welding, explosive welding, or other joining means. Due to the need for cleanliness, close fittings, heat application, and atmospheric control, these metallurgical bonding techniques have problems which are not easily solvable in areas such as nuclear steam generators where human access is limited.

One particular method of securing a sleeve within a tube is described in United States Patent No. 4,069,573, issued January 24, 1978 to Rogers, Jr. et al. In the patent to Rogers, Jr. et al., the sleeve is positioned within the tube so that it extends coextensive with the region of degraded tube wall and partially beyond the axial extremes of the degraded area. A radially outwardly directed force is then applied to the tubular sleeve from within along a portion of the sleeve at each end, extending beyond the degraded area. The force is sufficient to cause outward plastic deformation of both the sleeve and the tube, resulting in an interference mechanical joint therebetween. As stated in the patent to Rogers, Jr. et al., the method as described therein does not produce a leaktight joint.

In United States Patent No. 3 025 596, issued March 20, 1962, to C. T. Ward et al., there is described a method for bonding concentric tubes or shells or other similarly mating parts that are formed of materials which are compatible with the process of brazing. While the patent to Ward et al. describes various methods for brazing tubular members together, it does not relate to and address the specific problems of securing a sleeve within a tube of a nuclear heat exchanger wherein human access is limited. The difficult environment associated with a nuclear steam generator limits the type of tube preparation, heating, and braze materials that are available for use such that common brazing techniques are not applicable to this environment.

In U.K. application GB—A—2 032 559, there is disclosed a method of repairing a defective weld between a heat exchanger tube and a tube sheet by bridging the defective weld by a sleeve, the one end of the sleeve being bonded to the tube sheet by explosive welding and the other end of the sleeve being brazed to the tube. The end region of the sleeve to be brazed to the tube is formed with two lands of such outside diameter that there is adequate clearance for the lands to slide freely into the tube. Intermediate the lands there are two grooves for containing braze material. After cleaning the tube and insertion of the sleeve, said other end of the sleeve is expanded radially outwardly by roll swaging to bring the lands almost into contact with the tube wall thereby providing a capillary clearance between the lands of the sleeve and the tube for melted braze material.

It is the principal object of the present invention to provide a method permitting remotely securing a sleeve within a heat exchange tube of a nuclear steam generator and then braze the joint so as to safely produce a leaktight joint between the sleeve and the tube.

With this object in view, the present invention resides in a method for brazing a metal sleeve within a method for brazing a metal sleeve within a metal tube of a nuclear steam generator wherein an annular groove is formed around a portion of the outside surface of said sleeve and said groove is filled with braze material and, after cleaning the inner surface of said tube the sleeve is positioned in said tube, then a portion of said sleeve in the area of said groove is expanded and brazed to said tube, characterized in that said portion of said sleeve is expanded to such an extent so as to cause permanent plastic deformation of both said sleeve and said tube thereby placing said braze material and said sleeve in close contact with the inner surface of said tube, and the portion of said sleeve wherein said braze material is located is internally heated to between 985°C and 1100°C for 10 to 20 seconds to cause said braze material to flow into the capillary gap between said sleeve and said tube.

The invention will become more readily apparent from the following description of a preferred embodiment thereof shown, by way of example only, in the accompanying drawings, wherein:

Figure 1 is a cross-sectional view in elevation of a sleeve and expander apparatus disposed within a heat exchange tube;

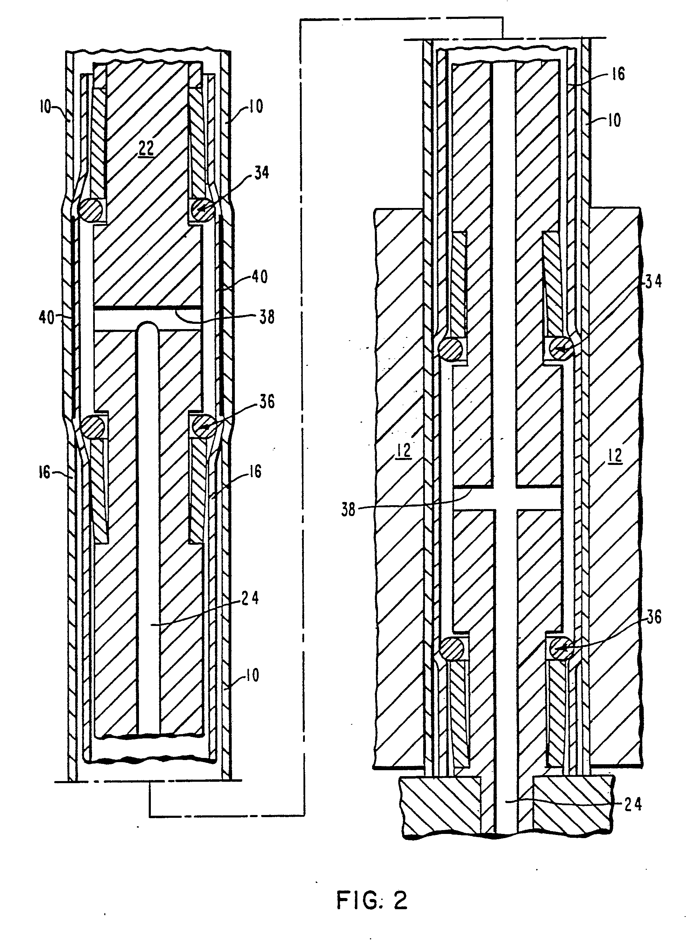

Figure 2 is an enlarged view of the sleeve and tube in the expanded configuration;

Figure 3 is a cross-sectional view in elevation of the sleeve with the heater disposed therein; and

Figure 4 is a cross-sectional view in elevation of the sleeve within a tube in an alternate arrangement.

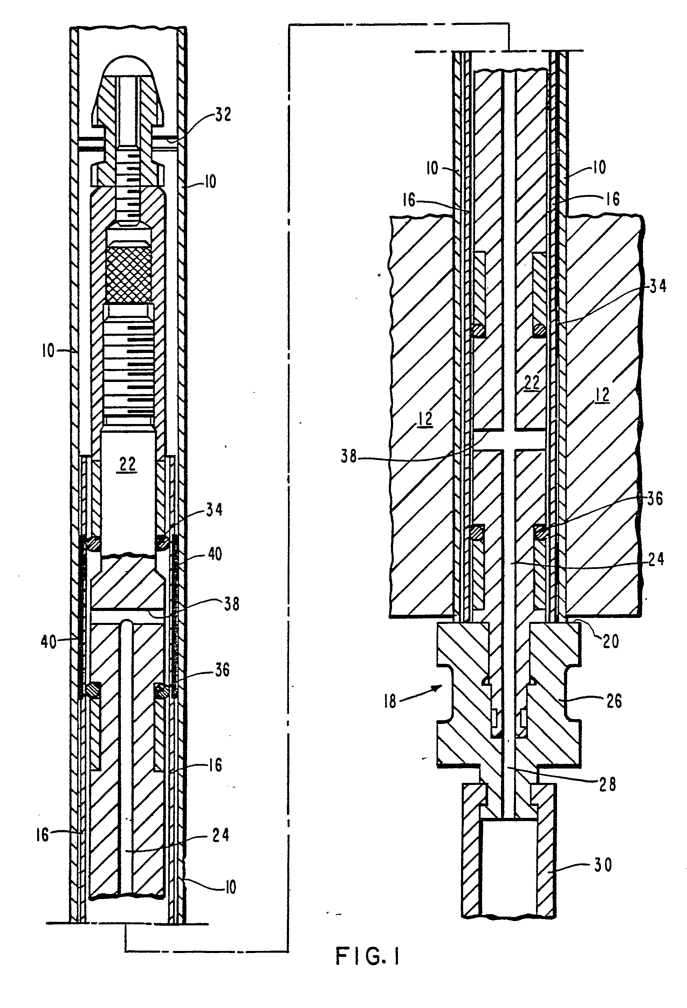

Referring now to Figure 1, the nuclear steam generator (not shown) comprises a plurality of heat exchange tubes 10 which may be U-shaped tubes and are attached at each end to a tubesheet 12. During operation of the nuclear steam generator, reactor coolant flows through the heat exchange tubes 10 in a manner so as to heat fluid surrounding tubes 10. The fluid around tubes 10 is converted to steam to produce electricity in a conventional manner. Since the reactor coolant flowing through heat exchange tubes 10 has passed through the nuclear reactor, it is radioactive. Therefore, it is important to isolate the coolant flowing through the tubes from the fluid surrounding the tubes. When a defect develops in heat exchange tube 10 such as defect 14, it is necessary to either plug heat exchange tube 10 or repair the area surrounding defect 14 so that no coolant leaks through defect 14. One method of repairing defect 14 is by inserting a metal sleeve 16 into heat exchange tube 10 in a manner so as to bridge the defective area.

Still referring to Figure 1, when it is necessary to repair a defect such as defect 14, the nuclear steam generator is drained of its coolant and deactivated so that the end of a tube 10 can be reached by either remote access manipulators or by working personnel. Tube 10 is then cleaned to remove the internal oxide layer therefrom. The cleaning process may comprise the use of a rotatable abrasive hone which may be a wire brush with a high pressure water mist coolant. The honing process takes approximately 1 minute and extends approximately 15 cm above and 15 cm below the proposed joint. In this cleaning process, the entire oxide layer is removed from the interior of the tube and washed out by the high pressure water so that a reliable braze bond may be achieved. The oxide layer that is on the interior of tube 10 may be approximately 0.024 mm in thickness and can be removed using a rotatable hone moving at approximately 1.8 m per minute in a linear direction and at about 800 rpm. The honing apparatus used for this cleaning process may be one such as that described in US—A—4 326 317 entitled "Decontamination Apparatus" or US—A—4 286 416 entitled "Segmented Flexible Hone" both of which are assigned to the Westinghouse Electric Corporation.

Once the oxide layer has been removed from the interior of tube 10, the tube may then be cleaned with a solvent such as methyl-ethyl ketone or acetone. This may be accomplished by using a rotatable member having a cotton swab attached thereto and which disburses the solvent in mist form. The device used to apply the solvent and clean the interior of tube 10 may be similar to that described in US—A—4 326 317; however, in this instance the abrasive hone is replaced with a cotton swab. In this step, as the rotating apparatus rotates within tube 10, the solvent is sprayed from the apparatus and onto the cotton swab. Also, as the apparatus is rotated within tube 10, the cotton swab having the solvent thereon contacts the interior of tube 10 thereby removing any remaining loose oxides. As with the abrasive hone, the cotton swab hone is used to clean the interior of tube 10 approximately 15 cm above and 15 cm below the joint area.

When the tubes 10 have been cleaned as described above, the tubes are then dried to remove any liquid from the interior of tube 10. For example, a blower may be placed in fluid communication with one end of tube 10 so as to blow hot dry air through the tube and out the other end of the tube 10. This drying process is continued until the tube 10 is dry.

Then a sleeve 16, which may be an Inconel sleeve, is positioned over an expander 18 which may be a hydraulic expander or a roll expander chosen from those well known in the art. Sleeve 16 is positioned over expander 18 such that one end of sleeve 16 is placed on ledge 20 of expander 18. Expander 18 with sleeve 16 mounted thereon is then inserted into tube 10 as shown in Figure 1. Ledge 20 of expander 18 is brought into contact with the bottom end of tube 10 so that the bottom end of sleeve 16 and the bottom end of tube 10 are in alignment. This provides an indexing point from which operators can determine the location of the top and bottom ends of sleeve 16 with respect to tube 10.

Still referring to Figure 1, expander 18 comprises a central metal member 22 having a bore 24 therein for passage of a fluid therethrough. Central member 22 is attached at its lower end to end piece 26 whereon ledge 20 is located. End piece 26 also has a second bore 28 therein which is in colinear alignment with first bore 24. A flexible conduit 30 may be attached to the lower

end of end piece 26 for conducting a fluid through second bore 28 and into first bore 24. A guide mechanism 32 may be attached to the top end of central member 22 for positioning expander 18 centrally within tube 10. Guide member 32 may be annular plastic strips attached to central member 22 or may be brush-like members for maintaining central member 22 in the proper relationship within tube 10 while allowing guide member 32 to pass through constricted portions of tube 10. A set of first seals 34 and a set of second seals 36 are disposed on central member 22 so as to define an annular area wherein sleeve 16 is to be expanded. In the case where sleeve 16 is to be expanded in several locations along its length, an additional first set of seals 34 and second set of seals 36 are located at that location. The seals may comprise a rubber O-ring and a neoprene backup ring chosen from those well known in the art. The seals are arranged to tightly contact the inside surface of sleeve 16. A transverse bore 38 is also provided in central member 22 and in fluid communication with first bore 24 for conducting a fluid from first bore 24 to the annular area defined between first seals 34 and second seals 36 for expanding sleeve 16 into contact with tube 10.

Still referring to Figure 1, sleeve 16 has a notch or annular groove 40 cut in the outside surface of sleeve 16 into which the braze material may be deposited. Groove 40 may be approximately 0.38 mm in depth and approximately 9.9 mm long. This creates a volume in which the braze material may be deposited prior to sleeve 16 being placed on expander 18. The volume of groove 40 is approximately 1.5 to 3 times the volume of the joint to be created such that when filled with braze material, the volume of the braze material in the groove is approximately 1.5 to 3 times the joint volume also. The braze material may be 82% gold and 18% nickel.

Before the braze material is placed in groove 40, sleeve 16 is cleaned with a mildly abrasive cloth such as an emery cloth to remove all foreign substances. After this cleaning, a flux such as sodium tetraborate in solution is applied to sleeve 16 in the area wherein sleeve 16 is to be joined to tube 10 and the braze material is placed in groove 40. The flux is applied to the exterior of the sleeve to form a hard layer suitable for storage and transportation of the braze material to the joint. Then, sleeve 16 is placed on expander 18 and positioned within tube 10 as shown Figure 1.

Once sleeve 16 and expander 18 have been positioned in tube 10 as shown in Figure 1, a fluid such as water is introduced from a fluid source (not shown) through flexible conduit 30 at a pressure of between approximately 844 bar and 1125 bar. The fluid flows through second bore 28 through first bore 24, and through transverse bore 38. From transverse bore 38 the fluid enters the annular chamber defined between first seals 34 and second seals 36. The fluid pressure causes sleeve 16 to expand into contact with and also expand tube 10 by approximately 0.13 mm. The deformation of tube 10 may not be visually noticeable but can be felt by manual inspection. The expansion causes permanent plastic deformation of both tube 10 and sleeve 16 so that sleeve 16 is in close contact with tube 10. The expansion of both sleeve 16 and tube 10 causes the braze material in groove 40 to be in close contact with the inside surface of tube 10. However, a small capillary gap of approximately 0.05 mm generally remains between sleeve 16 and tube 10 into which the braze material flows when heated. Generally, the length of sleeve 16 to be expanded in the region of groove 40 is approximately 38 mm. In this manner, sleeve 16 is positioned firmly within tube 10 but is not yet completely sealed. Approximately 50.8 mm length of sleeve 16 in the tubesheet area is placed in close contact with tube 10 in that region to provide a good joint.

As an alternative to or in addition to hydraulically expanding sleeve 16 in the region of tubesheet 12, sleeve 16 may be mechanically hard rolled using conventional apparatus. In either case, sleeve 16 is expanded approximately 0.05 mm—0.13 mm on the diameter.

It should be noted that since both the lower end of sleeve 16 and the lower end of tube 10 have greater accessibility than does the upper section of sleeve 16, these lower ends can be welded by conventional methods or may be brazed as described above. The expansion of the lower end of sleeve 16 into contact with tube 10 is performed to increase the contact between sleeve 16 and tube 10 in that area and to enhance the weldability of sleeve 16 and tube 10 in that area. It should be further noted that since the end of sleeve 16 and tube 10 are capable of being welded, it is not necessary to braze that section of sleeve 16.

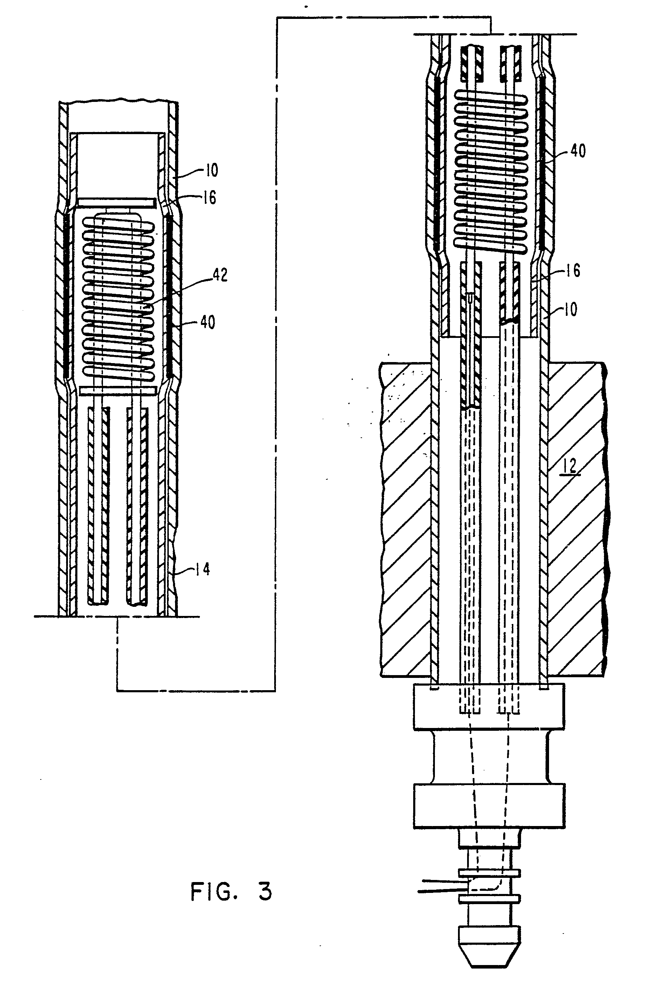

Referring now to Figure 3, a heater such as electrical induction coil 42 is inserted in sleeve 16 so that induction coil 42 is positioned in the area of sleeve 16 wherein the braze material is located. Induction coil 42 may be a water-cooled copper coil capable of carrying between approximately 2—4 kilowatts of power. Induction coil 42 may incorporate a quartz-fiber optical feedback mechanism to monitor and control temperatures of sleeve 16 in the joint region. Once placed in proper relationship, induction coil 42 is activated so as to heat sleeve 16 and the braze material therein to a temperature between approximately 985°C and 1100°C. Preferably, the braze material should be heated to a temperature of between approximately 1010°C to 1075°C. Generally, it takes approximately 30 seconds for the induction coil 42 to heat the braze material to this temperature. Once in the recommended temperature range, the temperature should be held at that range for approximately 15 seconds. When heated to this temperature, the braze material flows out of groove 40 and into the small gap between sleeve 16 and the inner surface of tube 10. The braze material flows into the gap between sleeve 16 and the inner surface of tube 10 filling the gap therebetween so as to create an effective braze joint therebetween. Next, induction coil 42 is removed from sleeve 16 and the braze material is allowed to cool. Once cooled, a solid brazed joint is formed between sleeve 16 and tube 10. In this configuration, sleeve 16 prevents leakage from tube 10 through defect 14.

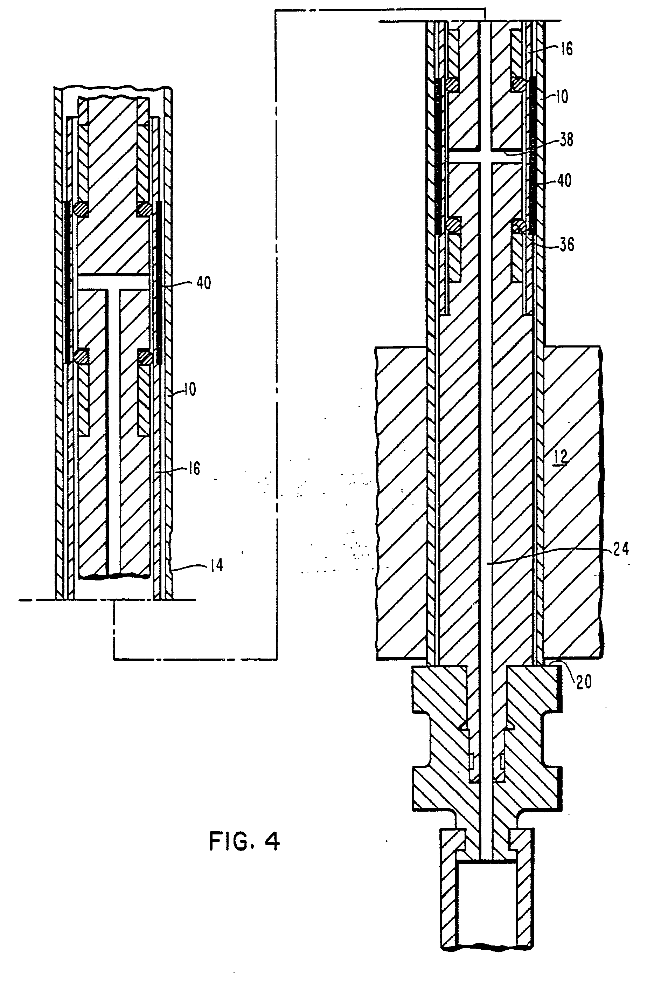

As an alternative, due to the location of defect 14, it may be necessary to position sleeve 16 above tubesheet 12. In this case, an expander 18 as shown in Figure 4 may be utilized to expand a plurality of grooves 40 into contact with tube 10. In this embodiment, since sleeve 16 is removed from the lower end of tube 10 and cannot be welded at its lower end, at least two brazed joints are needed. The process is the same as that previously described except that both joints are made by brazing. Because there are at least two brazed joints, an induction coil 42 as shown in Figure 3 may be employed so as to heat both braze regions simultaneously.

Therefore, it can be seen that the invention provides a method for brazing a sleeve within a heat exchange tube of a nuclear steam generator in a quick and efficient manner thereby yielding a leak-tight joint between the sleeve and tube.

## Claims

1. A method for brazing a metal sleeve (16) within a metal tube (10) of a nuclear steam generator wherein an annular groove (40) is formed around a portion of the outside surface of said sleeve (16) and said groove (40) is filled with braze material and, after cleaning the inner surface of said tube (10) the sleeve (16) is positioned in said tube (10), then a portion of said sleeve (16) in the area of said groove (40) is expanded and brazed to said tube, characterized in that said portion of said sleeve is expanded to such an extent so as to cause permanent plastic deformation of both said sleeve (16) and said tube (10) thereby placing said braze material and said sleeve (16) in close contact with the inner surface of said tube (10), and the portion of said sleeve (16) wherein said braze material is located is internally heated to between 985°C and 1100°C for 10 to 20 seconds to cause said braze material to flow into the capillary gap between said sleeve (16) and said tube (10).

2. A method according to claim 1, characterized in that for cleaning of the interior of said tube (10), the tube (10) is abrasively honed and swabbed with a solvent to remove foreign substances and said tube (10) is then blow-dryed with hot, dry air, said sleeve (16) is coated with a thin layer of flux before it is positioned in said tube (10), an induction coil (42) is inserted into said sleeve (16) and positioned therein adjacent said portion of said sleeve (16) and said portion is heated by said induction coil to about 1045°C for approximately 15 seconds.

3. A method according to any of claims 1 or 2, characterized in that at least one end of said sleeve (16) is welded to said tube (10) before said sleeve (16) is internally heated.

4. A method according to any of claims 1, 2 or 3, characterized in that said braze material consists of about 82% gold and 18% nickel.

## Revendications

1. Procédé pour le brasage fort d'une douille métallique (16) à l'intérieur d'un tube métallique (10) d'un générateur nucléaire de vapeur, dans lequel une gorge annulaire (40) est formée autour d'une portion de la surface externe de ladite douille (16) et ladite gorge (40) est remplie de brasure, et après nettoyage de la surface interne du tube (10), la douille (16) est positionnée dans ledit tube (10), puis une portion de ladite douille (16) située au voisinage de ladite gorge (40) est expansée et brasée audit tube, caractérisé en ce que ladite portion de ladite douille est expansée suffisamment pour produire une déformation plastique permanente de ladite douille (16) et dudit tube (10), mettant ainsi ladite brasure et ladite douille (16) en contact serré avec la surface interne dudit tube (10), et en ce que la portion de ladite douille (16) à l'intérieur de laquelle se trouve ladite brasure est chauffée intérieurement entre 985 et 1100°C pendant 10 à 20 secondes pour que ladite brasure s'écoule dans la fente capillaire entre ladite douille (16) et ledit tube (10).

2. Procédé selon la revendication 1, caractérisé en ce que pour le nettoyage de l'intérieur dudit tube (10), le tube (10) est soumis à un nonage et écouvillonné avec un solvant pour éliminer les corps étrangers, et ledit tube (10) est alors chauffé par un jet d'air chaud et sec, ladite douille (16) est recouverte d'une fine couche de fondant avant d'être positionnée dans ledit tube (10), une bobine d'induction (42) est insérée dans ladite douille (16) et positionnée dans celle-ci defaçon adjacente à ladite portion de ladite douille (16) et ladite portion est chauffée par ladite bobine d'induction à environ 1045°C pendant approximativement 15 secondes.

3. Procédé selon la revendication 1 ou 2, caractérisé en ce qu'au moins une extrémité de ladite douille (16) est soudée audit tube (10) avant que ladite douille (16) soit chauffée intérieurement.

4. Procédé selon l'une quelconque des revendications 1, 2 ou 3, caractérisé en ce que ladite brasure est constituée d'environ 82% d'or et 18% de nickel.

## Patentansprüche

1. Verfahren zum Harteinlöten einer Metallhülse (16) in ein Metallrohr (10) eines nuklearen Dampferzeugers, wobei in einem Teil der Mantelfläche der Hülse (16) eine Ringnut (40) gebildet und diese Ringnut (40) mit Hartlotmaterial gefüllt wird und wobei nach dem Reinigen der Innenwandungsfläche des Rohres (10) die Hülse (16) in das Rohr (10) eingesetzt, sodann ein Teil der Hülse (16) im Bereich der genannten Ringnut (40) aufgeweitet und in das Rohr eingelötet wird, dadurch gekennzeichnet, daß der genannte Teil der Hülse in einem solchen Maße aufgeweitet wird, daß eine bleibende plastische Verformung sowohl der Hülse (16) als auch des Rohres (10) eintritt, so daß das Hartlotmaterial und die Hülse (16) in satte Anlage mit der Innenwandfläche des Rohres (10) gelangt, und daß derjenige Bereich der Hülse (16), in welchem sich das Hartlotmaterial befindet, von innen auf eine Temperatur zwischen 985°C und 1100°C während einer Dauer von 10 bis 20 Sekunden erhitzt wird, um das Hartlotmaterial in den Kapillarspalt zwischen der Hülse (16) und dem Rohr (10) einfließen zu lassen.

2. Verfahren nach Anspruch 1, dadurch gekennzeichnet, daß zum Reinigen des Inneren des Rohres (10) das Rohr (10) spanabnehmend gehont und mit einem Lösungsmittel ausgewischt wird, um Fremdsubstanzen zu beseitigen, wonach das Rohr (10) durch Ausblasen mit heißer trockener Luft getrocknet wird, daß weiter die Hülse (16) vor ihrem Einsetzen in das Rohr (10) mit einer dünnen Flußmittelschicht überzogen wird und daß eine Induktionsspule (42) in die Hülse (16) eingeführt und darin in dem genannten Bereich der Hülse (16) positioniert und sodann der genannte Bereich durch die Induktionsspule während etwa 15 Sekunden auf etwa 1045°C erwärmt wird.

3. Verfahren nach Anspruch 1 oder 2, dadurch gekennzeichnet, daß mindestens ein Ende der Hülse (16) mit dem Rohr (10) verschweißt wird, bevor die Hülse (16) von innen erwärmt wird.

4. Verfahren nach Anspruch 1, 2 oder 3, dadurch gekennzeichnet, daß das Hartlotmaterial aus etwa 82% Gold und 18% Nickel besteht.

FIG. 1

FIG. 2

FIG. 3

FIG. 4